# EUROPEAN PATENT SPECIFICATION

(11) **EP 3 337 988 B1**
(45) Date of publication and mention of the grant of the patent: **25.12.2019**
(21) Application number: 16839678.6
(22) Date of filing: 16.08.2016
(51) Int. Cl.: F16C 11/02, F16C 11/04, F16C 11/10, F16B 2/14

(54) **DEVICE FOR MOUNTING AND DISMANTLING A BEARING COLLAR ON A PIN BOLT**
VORRICHTUNG ZUR MONTAGE UND DEMONTAGE EINES LAGERKRAGENS AUF EINEM STIFTBOLZEN
DISPOSITIF POUR MONTER ET DÉMONTER UN COLLIER DE PALIER SUR UN BOULON À BROCHE

(30) Priority: 21.08.2015 NO 20151070
(43) Date of publication of application: 27.06.2018
(73) Proprietor: Bondura Technology AS, 4340 Bryne (NO)
(72) Inventor: KARLSEN, Øyvind, 4018 Stavanger (NO)
(74) Representative: Håmsø Patentbyrå AS
(86) International application number: PCT/NO2016/050170
(87) International publication number: WO 2017/034412

(56) References cited:
- US-A- 4 089 613
- US-A- 5 209 594
- US-A- 5 551 794
- US-A1- 2009 199 365
- US-A1- 2009 250 581
- US-A1- 2009 250 581

## Description

The invention relates to a device for mounting and dismantling a first bearing collar on a conical first end portion of a pin bolt arranged for the articulated connection of two elements, the pin bolt extending through corresponding supporting bores of the elements, and a bolt, extending through a bore in the pin bolt, being provided, in a first end portion, with an end plate which is arranged to rest against an external end face of the first bearing collar, and being provided, in a second end portion, with an engagement portion for a spanner for rotating the bolt.

When two elements are connected by means of a pin bolt including expandable bearing collars arranged on the conical end portions of the pin bolt, for example a pin bolt of the kind disclosed in NO 302053 B1, there is a need in some situations to carry out the mounting of both collars from the same end of the pin bolt. It is often of vital importance for a good result that the bearing collars can be mounted independently of each other.

Another relevant pin assembly is disclosed in US 5 209 594.

The invention has for its object to remedy or reduce at least one of the drawbacks of the prior art or at least provide a useful alternative to the prior art.

The object is achieved through the features that are specified in the description below and in the claims that follow.

The invention provides a device for mounting and dismantling a bearing collar on a pin bolt with a conical end portion.

The pin bolt is provided with a through bore. In a first end portion, the pin-bolt bore is threaded. A bolt is provided, in a first end portion, with an end plate and a first threaded portion extending from the end plate towards a middle portion, which has a smaller diameter than the first threaded portion. The end plate is arranged to rest against an end face of a first expandable bearing collar which is arranged to encircle the first conical end portion of the pin bolt. The first threaded portion is arranged to engage with the threaded first end portion of the pin-bolt bore. The middle portion of the bolt is typically cylinder-shaped, possibly formed with a somewhat narrowed cross-section in part of the middle portion. In a second end portion, the bolt is provided with an engagement portion for a spanner, for example in the form of a portion with a hexagonal cross-section for connection to an open-end spanner or the like.

From the engagement portion, a coupling portion for the attachment of a mounting means for a second expandable bearing collar may extend. The coupling portion may be formed as a second threaded portion extending towards the middle portion. The second threaded portion has a smaller diameter than the middle portion.

The second end portion is arranged to receive the second bearing collar, possibly also said mounting means, for example a nut which is arranged to engage with the optional second threaded portion, and possibly one or more washers arranged between the optional nut and an outward-facing end face on the second bearing collar. The second bearing collar is arranged to encircle the second conical end portion of the pin bolt. The nut and the corresponding second threaded portion of the bolt constitute a preferred simple form of mounting means for the second bearing collar, but the invention does not exclude other forms of mounting means for the second bearing collar.

The end plate of the bolt may be stepped, an inward-facing portion being arranged to be accommodated in a bore in the end portion of the first bearing collar. It is an advantage if the stepped end-plate portion has an axial extent, which is somewhat larger than the length of the centre bore of the bearing collar.

When the pin bolt is being mounted, the first bearing collar is slid onto the bolt into abutment against the end plate. The bolt is inserted into the bore of the pin bolt, and the pin bolt is then inserted into supporting bores in elements that are to be joined by means of the pin bolt. The first bearing collar is pulled onto the conical first end portion of the pin bolt and is expanded into abutment against its respective supporting bore by the bolt being screwed into the threads of the first end portion of the pin-bolt bore by means of a spanner which is connected to the engagement portion of the projecting second end portion of the bolt. Then the second bearing collar is slid onto the second end portion of the bolt and is pressed onto the conical second end portion of the pin bolt and expanded into abutment against its respective supporting bore by means of the mounting means, for example by said nut together with washers, if any, being screwed in on the second threaded portion of the bolt.

By restricting the axial travel of the first bearing collar on the bolt, said first bearing collar may easily be released from its abutment in the supporting bore by the bolt being unscrewed from the threads in the first end portion of the pin bolt after at least the nut has been loosened from its abutment against the second bearing collar. Said axial restriction is provided by a locking element being brought into engagement with the bolt and into supporting abutment against an internal abutment surface on the first bearing collar. The locking element may be formed of a nut, which has been screwed onto the first threaded portion of the bolt into abutment against the stepped end face of the end plate of the bolt. When the stepped end-plate portion has an axial extent that is somewhat larger than the length of the centre bore in the end portion of the bearing collar, the nut may be tightened against said end-plate portion without the bolt being prevented from rotating relative to the bearing collar.

It is an advantage if the first end portion of the pin bolt includes a recess, which can accommodate the locking element at least partially.

It is an advantage if abutment surfaces that move relative to adjacent surfaces during the installation and removal of the pin bolt, especially abutment surfaces like the end faces of the end plate of the bolt, the washers and the bearing collars, are coated with a friction-reducing means.

The invention is defined by the independent claim. The dependent claims define advantageous embodiments of the invention.

The invention relates, more specifically, to a device for mounting and dismantling a first bearing collar on a conical first end portion of a pin bolt arranged for the articulated connection of two elements, the pin bolt being extendable through corresponding supporting bores in the elements, the device comprising a bolt, which is arranged to extend through a bore in the pin bolt, being provided, in a first end portion, with an end plate which is arranged to abut against an external end face of the first bearing collar, and being provided, in a second end portion, with an engagement portion for a spanner for rotating the bolt, characterized by the first end portion of the bolt including a first threaded portion arranged to engage, by rotation of the bolt, with a threaded portion of the bore of the pin bolt arranged at the conical first end portion of the pin bolt.

A locking element may be connected to the bolt and be arranged near an internal end face of the first bearing collar. Thereby the first bearing collar may also be pushed out of the conical end portion of the pin bolt by means of the bolt.

A locking element in the form of a nut may be in engagement with the first threaded portion of the bolt and be arranged near an internal end face of the first bearing collar. The locking element is thereby provided without great costs.

The pin bolt may include a recess arranged in an end face of the first end portion, the recess being arranged to accommodate the locking element at least partially. Thereby space is provided for the locking element without reducing the size of the contact surface between the end portion of the pin bolt and the bearing collar.

The end plate may be provided with a stepped portion, which is arranged to be accommodated by an axial supporting bore of the first bearing collar. Thereby the end plate will have a better connection to the bolt without the bolt and/or end plate projecting to an unnecessary extent from the bearing collar.

The end plate may be provided with a stepped portion, which is arranged to be accommodated by an axial supporting bore in the first bearing collar as it has an axial extent that is larger than the length of the axial supporting bore. Thereby the locking element in the form of a nut may be tightened against the stepped portion while, at the same time, the bolt can be rotated freely relative to the bearing collar.

The second end portion of the bolt may include a coupling portion arranged to engage with a mounting means arranged to move a second bearing collar in the axial direction towards the first bearing collar. Thereby the mounting means of the second bearing collar may be anchored to an element primarily provided for other purposes, which simplifies the mounting means.

The second end portion of the bolt may include a second threaded portion arranged to receive a mounting means in the form of a nut arranged to rest supportingly against an external end face of the second bearing collar. Thereby a simple and cost-effective mounting means is provided for the second bearing collar.

The second threaded portion may have a thread direction that is the reverse of a thread direction of the first threaded portion. An advantage of this is that mounting the second bearing collar does not involve any risk of the first bearing collar loosening.

In what follows, an example of a preferred embodiment is described, which is visualized in the accompanying drawings, in which:
- Figure 1: shows a pin-bolt arrangement according to the invention in perspective; and
- Figure 2: shows an axial section through the pin-bolt arrangement arranged in supporting bores in elements that are to be connected to each other.

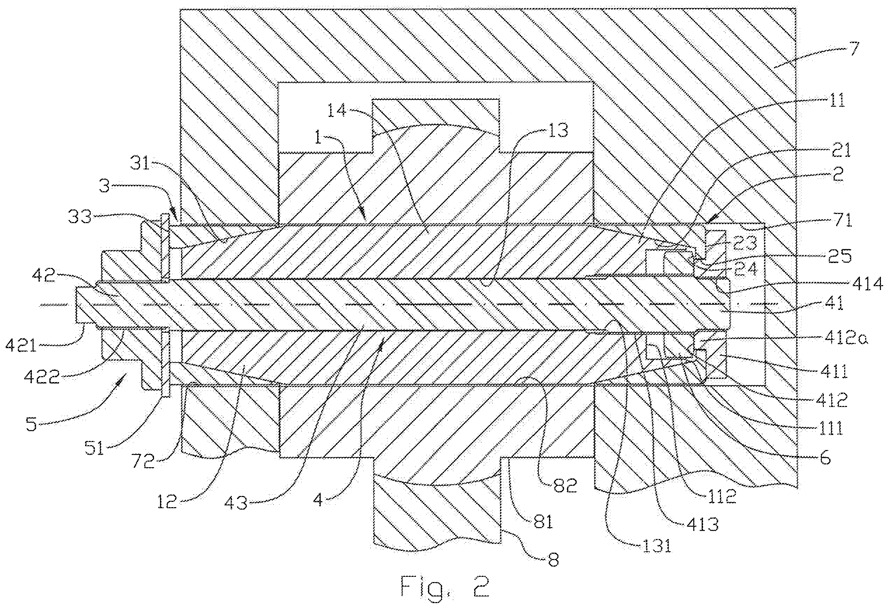

Reference is made to figure 2 in particular, in which all the elements that form part of the pin-bolt arrangement according to the invention are shown.

In the figures, the reference numeral 1 indicates a pin bolt provided with first and second conical end portions 11, 12 and a through pin-bolt bore 13 (see figure 2) arranged at the centre of the pin bolt 1. The end portions 11, 12 are each arranged to receive a respective bearing collar 2, 3 provided with a conical, internal abutment surface 21 and 31, respectively (see figure 2). The pin bolt 1 is arranged for the rotatable connection of two elements 7, 8, the first element 7 being bifurcated and resting supportingly against the second element 8, which is shown here with a spherical bearing bush 81. The first element 7 is provided with first and second supporting bores 71, 72. In figure 2, the first supporting bore 71 is shown as a recess, whereas the second supporting bore 72 is a through-going one. The first and second supporting bores 71, 72 are arranged to receive respective bearing collars 2, 3, which, when being moved axially onto the respective conical end portions 11, 12, expand into clamping abutment against the supporting bores 71, 72. The bearing bush 81 of the second element 8 is provided with a third supporting bore 82 enclosing a cylindrical middle portion 14 of the pin bolt 1.

The pin bolt 1 is provided with a through pin-bolt bore 13 (see figure 2), which is shown here as being centric. In the pin bolt 1, from an end face 111 at the first end portion 11, a recess 112 is provided, concentric with the pin-bolt bore 13. The pin-bolt bore 13 is provided with a threaded first end portion 131 extending inwards from the recess 112.

The pin-bolt bore 13 is arranged to receive a through bolt 4 (see especially figure 2) which, in a first end portion 41, is provided with an end plate 411 which may rest supportingly against an outward-facing end face 23 of the first bearing collar 2. The end plate 411 is stepped and a stepped end-plate portion 412a with an end face 412 extends through an axial, centric bore 25 in the first bearing collar 2. The end plate 411 is shown here as being attached to the bolt 4 by means of a coupling 414, shown as threads in figure 2.

The first end portion 41 of the bolt (see figure 2) is provided with a first threaded portion 413, which is arranged to engage with the threaded first end portion 131 of the pin-bolt bore 13.

A second end portion 42 of the bolt 4 is provided with an engagement portion 421 arranged to lockingly engage with a spanner, not shown, for rotating the bolt 4, for example by the engagement portion 421 having a hexagonal cross section.

On the bolt 4, further inside the engagement portion 421 (see figure 2), a coupling portion 422 is arranged, adapted for releasable connection to a mounting means 5 which, by abutment against an outward-facing end face 33 of the second bearing collar 3, can push the second bearing collar 3 onto the conical second end portion 12 of the pin bolt 1. In the figures, the mounting means 5 is shown as a nut, more particularly a flanged nut which is in engagement with a second threaded portion 422 of the second end portion of the bolt 4, projecting from the pin bolt 1. A washer 51 is arranged between the nut 5 and the second bearing collar 3.

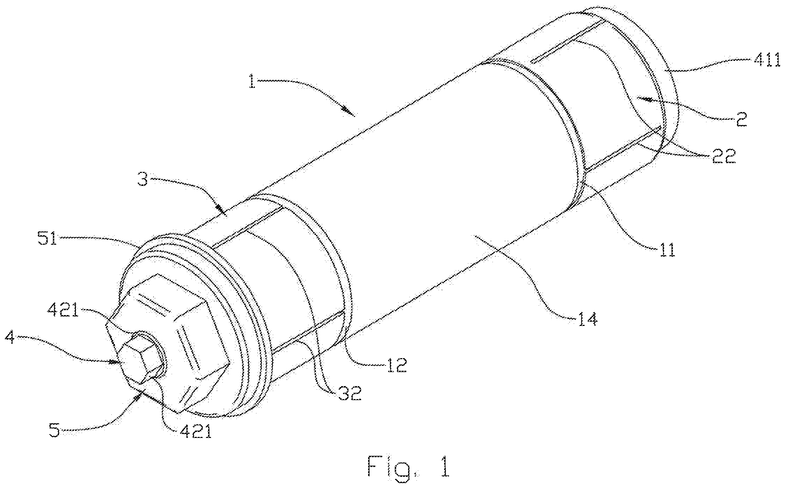

In figure 1, the bearing collars 2, 3 are shown with several splits 22 and 32, respectively, extending in the axial direction. The purpose of the splits 22, 32 is to ease the radial expansion of the bearing collars 2, 3.

A locking element 6 (see figure 2) is attached to the first end portion 41 of the bolt 4 and lies near an internal end face 24 of the first bearing collar 2. The locking element is shown here as a nut 6 which is in engagement with the first threaded portion 413. If the end plate 411 is stepped and the stepped end-plate portion 412a has a somewhat larger axial extent than the length of the axial bore 25 of the first bearing collar 2, the nut 6 may be tightened against the stepped end face 412 without the bolt 4 being prevented from rotating relative to the first bearing collar 2.

When the pin bolt 1 is to connect the elements 7, 8, the first bearing collar 2 is slid onto the bolt 4 with the outward-facing end face 23 against the end plate 411 before the bolt 4 is inserted into the bore 13 of the pin bolt 1 from the first end portion 131 and the first threaded portion 413 of the bolt 4 is screwed into the threaded end portion 131 of the pin-bolt bore 13. The second bearing collar 3 is fitted loosely on the second conical end portion 12 of the pin bolt 1 together with the mounting means 5, in the embodiment shown by the nut 5 being screwed onto the second threaded portion 422 of the bolt 4 into loose abutment against the outward-facing end face 33 of the second bearing collar 3. The elements 7, 8 are positioned in such a way that the supporting bores 71, 82, 72 are in line. The pin-bolt arrangement is inserted into the supporting bores 71, 82, 72. The first bearing collar 2 is then tightened against the first supporting bore 71 of the first element 7 by the bolt 4 being screwed further into the threaded portion 413 by means of a spanner (not shown) connected to the engagement portion 421 of the bolt 4, the bearing collar 2 then being pulled onto the first conical end portion 11 of the pin bolt 1 and being expanded radially. Then the second bearing collar 3 is tightened against the second supporting bore 72 of the first element 7 by the mounting means 5 pushing the second bearing collar 3 onto the second conical end portion 12 of the pin bolt 1 so that it is expanded radially against the supporting bore 72, in the embodiment shown by the nut 5 being screwed onto the second threaded portion 422 of the bolt 4 into abutment against the outward-facing end face 33 of the second bearing collar 3. To prevent the mounting of the second bearing collar 3 from resulting in the bolt 4 being rotated, thereby affecting the mounting of the first bearing collar 2, it is an advantage if the bolt 4 is held fixed with the spanner, not shown, connected to the engagement portion 421 of the bolt 4.

When the bolt 4 is provided with the locking element 6 at the inward-facing end face 24 of the first bearing collar 2, the first bearing collar 2 can be pushed out of the conical end portion 11 by the bolt 4 being screwed out of the threaded end portion 131 of the pin-bolt bore 13.

If the mounting means 5 of the second bearing collar 3 is formed as a nut which is in engagement with a second threaded portion 422 of the bolt 4, it may be an advantage if the second threaded portion 422 is threaded reversely to the first threaded portion 413 to prevent the mounting of the second bearing collar 3 from resulting in the first bearing collar 2 loosening.

It should be noted that all the above-mentioned embodiments illustrate the invention, but do not limit it, and persons skilled in the art may construct many alternative embodiments without departing from the scope of the attached claims. In the claims, reference numbers in parentheses are not to be regarded as restrictive. The use of the verb "to comprise" and its different forms does not exclude the presence of elements or steps that are not mentioned in the claims. The indefinite article "a" or "an" before an element does not exclude the presence of several such elements.

The fact that some features are indicated in mutually different dependent claims does not indicate that a combination of these features cannot be used with advantage.

## Claims

1. A device for mounting and dismantling a first bearing collar (2) on a conical first end portion (11) of a pin bolt (1) arranged for the articulated connection of two elements (7, 8), the pin bolt (1) being extendable through corresponding supporting bores (71, 72, 81) in the elements (7, 8), the device comprising
a bolt (4), which is arranged to extend through a pin-bolt bore (13) in the pin bolt (1), being provided, in a first end portion (41), with an end plate (411) which is arranged to rest against an external end face (23) of the first bearing collar (2), and being provided, in a second end portion (42), with an engagement portion (421) for a spanner for rotating the bolt (4), **cha-racterized in** that
the first end portion of the bolt (4) includes a first threaded portion (413) arranged to engage, by rotation of the bolt (4), with a threaded portion (131) of the pin-bolt bore (13) of the pin bolt (1) arranged at the conical first end portion (11) of the pin bolt (1).

2. The device according to claim 1, wherein a locking element (6) is connected to the bolt (4) and is arranged near an internal end face (24) of the first bearing collar (2).

3. The device according to claim 1, wherein a locking element (6) in the form of a nut is in engagement with the first threaded portion (413) of the bolt (4) and is arranged near an internal end face (24) of the first bearing collar (2).

4. The device according to claim 2 or 3, wherein the pin bolt (1) includes a recess (112) arranged in an end face (111) of the first end portion (11) and is arranged to accommodate the locking element (6) at least partially.

5. The device according to claim 1, wherein the end plate (411) is provided with a stepped portion (412a) which is arranged to be accommodated by an axial bore (25) in the first bearing collar (2).

6. The device according to claim 1, wherein the end plate (411) is provided with a stepped portion (412a) which is arranged to be accommodated by an axial bore (25) in the first bearing collar (2) and has an axial extent which is larger than the length of the axial bore (25).

7. The device according to claim 1, wherein the second end portion (42) of the bolt (4) includes a coupling portion (422) arranged to engage with a mounting means (5) arranged to displace a second bearing collar (3) in the axial direction towards the first bearing collar (2).

8. The device according to claim 1, wherein the second end portion (42) of the bolt (4) includes a second threaded portion (422) arranged to receive a mounting means (5) in the form of a nut arranged to rest supportingly against an external end face (33) of a second bearing collar (3).

9. The device according to claim 1, wherein the second end portion (42) of the bolt (4) includes a second threaded portion (422) arranged to receive a mounting means (5) in the form of a nut arranged to rest supportingly against an external end face (33) of a second bearing collar (3) and wherein the second threaded portion (422) has a thread direction which is the reverse of a thread direction of the first threaded portion (413).

## Patentansprüche

1. Vorrichtung zur Montage und Demontage eines ersten Lagerkragens (2) auf einem konischen ersten Endabschnitt (11) eines Stiftbolzens (1), welcher zur gelenkigen Verbindung von zwei Elementen (7, 8) angeordnet ist, wobei der Stiftbolzen (1) durch entsprechende Stützbohrungen (71, 72, 81) in den Elementen (7, 8) erstreckbar ist, wobei die Vorrichtung
einen Bolzen (4), welcher angeordnet ist, um sich durch eine Stiftbolzenbohrung (13) im Stiftbolzen (1) zu erstrecken, umfasst, welcher versehen ist, in einem ersten Endabschnitt (41), mit einer Endplatte (411), welche angeordnet ist, um gegen eine äussere Endfläche (23) des ersten Lagerkragens (2) anzuliegen, und welcher versehen ist, in einem zweiten Endabschnitt (42), mit einem Eingriffsabschnitt (421) für einen Schraubenschlüssel zum Drehen des Bolzens (4), **dadurch gekennzeichnet, dass**
der erste Endabschnitt des Bolzens (4) einen ersten Gewindeabschnitt (413) umfasst, welcher angeordnet ist, um mit einem Gewindeabschnitt (131) der Stiftbolzenbohrung (13) des Stiftbolzens (1), welcher am konischen ersten Endabschnitt (11) des Stiftbolzens (1) angeordnet ist, durch Drehen des Bolzens (4) in Eingriff zu gehen.

2. Vorrichtung gemäss Anspruch 1, wobei ein Verriegelungselement (6) mit dem Bolzen (4) verbunden ist und nahe an einer inneren Endfläche (24) des ersten Lagerkragens (2) angeordnet ist.

3. Vorrichtung gemäss Anspruch 1, wobei ein Verriegelungselement (6) in der Form einer Mutter mit dem ersten Gewindeabschnitt (413) des Bolzens (4) in Eingriff ist und nahe einer inneren Endfläche (24) des ersten Lagerkragens (2) angeordnet ist.

4. Vorrichtung gemäss Anspruch 2 oder 3, wobei der Stiftbolzen (1) eine Ausnehmung (122) umfasst, welche in einer Endfläche (111) des ersten Endabschnitts (11) angeordnet ist und angeordnet ist, um das Verriegelungselement (6) zumindest teilweise aufzunehmen.

5. Vorrichtung gemäss Anspruch 1, wobei die Endplatte (411) mit einem gestuften Abschnitt (412a) versehen ist, welcher angeordnet ist, durch eine axiale Bohrung (25) im ersten Lagerkragen (2) aufgenommen zu werden.

6. Vorrichtung gemäss Anspruch 1, wobei die Endplatte (411) mit einem gestuften Abschnitt (412a) versehen ist, welcher angeordnet ist, durch eine axiale Bohrung (25) im ersten Lagerkragen (2) aufgenommen zu werden und eine axiale Ausdehnung aufweist, welche grösser als die Länge der axialen Bohrung (25) ist.

7. Vorrichtung gemäss Anspruch 1, wobei der zweite Endabschnitt (42) des Bolzens (4) einen Kupplungsabschnitt (422) beinhaltet, welcher angeordnet ist, um mit einem Montagemittel (5), welches angeordnet ist, um einen zweiten Lagerkragen (3) in der axialen Richtung in Richtung des ersten Lagerkragens (2) zu verschieben, in Eingriff zu gehen.

8. Vorrichtung gemäss Anspruch 1, wobei der zweite Endabschnitt (42) des Bolzens (4) einen zweiten Gewindeabschnitt (422) beinhaltet, welcher angeordnet ist, um ein Montagemittel (5) in der Form einer Mutter, welche angeordnet ist, um stützend gegen eine äussere Endfläche (33) eines zweiten Lagerkragens (3) anzuliegen, aufzunehmen.

9. Vorrichtung gemäss Anspruch 1, wobei der zweite Endabschnitt (42) des Bolzens (4) einen zweiten Gewindeabschnitt (422) beinhaltet, welcher angeordnet ist, um ein Montagemittel in der Form von einer Mutter, welche angeordnet ist, um stützend gegen eine äussere Endfläche (33) eines zweiten Lagerkragens (3) anzuliegen, aufzunehmen, und wobei der zweite Gewindeabschnitt (422) eine Gewinderichtung hat, welche umgekehrt von einer Gewinderichtung des ersten Gewindeabschnitts (413) ist.

## Revendications

1. Un dispositif pour monter et démonter un premier collier de palier (2) sur une première partie d'extrémité conique (11) d'un boulon à broche (1) agencé pour la liaison articulée de deux éléments (7, 8), le boulon à broche (1) étant extensible à travers des perçages de support (71, 72, 81) correspondants dans les éléments (7, 8), le dispositif comprenant
un boulon (4), étant agencé pour s'étendre à travers un perçage de boulon à broche (13) dans le boulon à broche (1), étant pourvu, dans une première partie d'extrémité (41), d'une plaque d'extrémité (411) qui est agencée pour reposer contre une face d'extrémité externe (23) du premier collier de palier (2), et étant pourvu, dans une seconde partie d'extrémité (42), d'une partie de prise (421) pour une clef pour faire tourner le boulon (4), **caractérisé en ce que**
la première partie d'extrémité du boulon (4) comprend une première partie filetée (413) agencée pour venir en prise, par rotation du boulon (4), avec une partie filetée (131) du perçage de boulon à broche (13) du boulon à broche (1) située au niveau de la première partie d'extrémité conique (11) du boulon à broche (1).

2. Le dispositif selon la revendication 1, dans lequel l'élément de verrouillage (6) est relié au boulon (4) et est agencé à proximité d'une face d'extrémité interne (24) du premier collier de palier (2).

3. Le dispositif selon la revendication 1, dans lequel un élément de verrouillage (6) sous la forme d'un écrou est en prise avec la première partie filetée (413) du boulon (4) et est agencé près d'une face d'extrémité interne (24) du premier collier (2).

4. Le dispositif selon la revendication 2 ou 3, dans lequel le boulon à goupille (1) comprend un évidement (112) agencé dans une face d'extrémité (111) de la première partie d'extrémité (11) et est agencé pour loger l'élément de verrouillage (6) au moins partiellement.

5. Le dispositif selon la revendication 1, dans lequel la plaque d'extrémité (411) est pourvue d'une partie en gradin (412a) qui est agencée pour être logée par un perçage axial (25) dans le premier collier de palier (2).

6. Le dispositif selon la revendication 1, dans lequel la plaque d'extrémité (411) est pourvue d'une partie en gradin (412a) qui est agencée pour être reçue par un perçage axial (25) dans le premier collier de palier (2) et a une étendue axiale qui est supérieure à la longueur du perçage axial (25).

7. Le dispositif selon la revendication 1, dans lequel la seconde partie d'extrémité (42) du boulon (4) comprend une partie d'accouplement (422) agencée pour venir en prise avec un moyen de montage (5) agencé pour déplacer un second collier de palier (3) dans la direction axiale vers le premier collier de palier (2).

8. Le dispositif selon la revendication 1, dans lequel la seconde partie d'extrémité (42) du boulon (4) comprend une seconde partie filetée (422) agencée pour recevoir un moyen de montage (5) sous la forme d'un écrou agencé pour reposer en appui contre une face d'extrémité externe (33) d'un second collier d'appui (3).

9. Le dispositif selon la revendication 1, dans lequel la seconde partie d'extrémité (42) du boulon (4) comprend une seconde partie filetée (422) agencée pour recevoir un moyen de montage (5) sous la forme d'un écrou agencé pour reposer en appui contre une face d'extrémité externe (33) d'un second collier de palier (3) et dans laquelle la seconde partie filetée (422) a une direction de filetage qui est l'inverse d'une direction de filetage de la première partie filetée (413).
